# EUROPÄISCHE PATENTANMELDUNG

(11) **EP 2 620 705 A2**
(43) Veröffentlichungstag der Anmeldung: **31.07.2013**
(21) Anmeldenummer: 12155612.0
(22) Anmeldetag: 15.02.2012
(51) Int. Cl.: F23G 5/00, H02J 3/28, H02J 13/00

(54) **Verfahren zur Anpassung der Einspeiseleistung von aus Biomasse gewonnenem Strom**

(30) Priorität: 27.01.2012 DE 102012001527
(71) Anmelder: Peek, Gerd, 49696 Grönheim (DE); Ortmann, Josef, 26169 Friesoythe (DE)
(72) Erfinder: Peek, Gerd, 49696 Grönheim (DE); Ortmann, Josef, 26169 Friesoythe (DE)
(74) Vertreter: Siekmann, Gunnar

(57) **Zusammenfassung**

Bei einem Verfahren zur Anpassung der Einspeiseleistung von aus Biomasse, insbesondere aus Biogas, erzeugtem elektrischen Strom, bei dem die Höhe der Einspeiseleistung in Abhängigkeit von der im Stromnetz benötigten elektrischen Energie anhand von eingehenden Impulsen verändert wird, ist vorgesehen, dass der Prozess zur Stromerzeugung nach einem Impulseingang zur Reduzierung der Einspeiseleistung zumindest über eine bestimmte Zeitdauer unverändert weitergefahren wird, wobei der nicht benötigte Teil des zumindest zeitweise in gleicher Höhe erzeugten Stromes abgezweigt und umgewandelt wird.

## Beschreibung

Die Erfindung bezieht sich auf ein Verfahren zur Anpassung der Einspeiseleistung von aus Biomasse, insbesondere aus Biogas, erzeugtem elektrischen Strom, bei dem die Höhe der Einspeiseleistung in Abhängigkeit von der im Stromnetz benötigten elektrischen Leistung anhand von eingehenden Impulsen verändert wird. Die Erfindung bezieht sich des Weiteren auch auf eine Vorrichtung zur Erzeugung von zumindest elektrischer Energie aus Biomasse oder einem aus Biomasse entstehenden Gärprodukt, insbesondere ein Blockheizkraftwerk, mit zumindest einem Stromerzeuger und einem mit dem Stromerzeuger gekoppelten Einspeiseleiter.

Das Erneuerbare-Energien-Gesetz schreibt vor, dass die Einspeiseleistung von Anlagen mit Kraft-Wärme-Kopplung, die mit Hilfe erneuerbarer Energiequellen betrieben werden und eine vorbestimmte Anlagenleistung überschreiten, durch den Stromnetzbetreiber im Bedarfsfall angepasst werden kann. Speziell bei einer Netzüberlastung, wenn insbesondere ein Überangebot an Strom herrscht, müssen an solchen Anlagen, wie z. B. Blockheizkraftwerke, die an einer Biogasanlage angeschlossen sind, die Einspeiseleistungen kurzfristig entweder um einen vorbestimmten Prozentsatz reduziert oder die Anlage gegebenenfalls ganz abgeschaltet werden können Derartige Regelvorgänge dienen insbesondere zur Sicherstellung der Netzstabilität.

Die bekannten Verfahren zur Anpassung der Einspeiseleistung von aus Biomasse, insbesondere aus Biogas, erzeugtem elektrischen Strom sehen vor, dass bei an der Anlage eingehenden Impulsen aus dem Stromnetz stets der an der Anlage ablaufende Prozess zur Stromerzeugung reduziert oder gänzlich heruntergefahren wird. Die in Verbindung mit den Blockheizkraftwerken zum Einsatz kommenden Biogasanlagen sind in ihrer Reaktionszeit jedoch derart träge, dass sich eine Reaktion sowohl auf eine Verringerung als auch auf eine Steigerung des in der Biogasanlage ablaufenden Gärprozesses jeweils erst mehrere Tage später einstellt. Eine Reduzierung der Fütterung hat z. B. nachweislich erst nach ein bis zwei Tagen einen nachhaltigen Einfluss auf die Erzeugung der Biogasmenge. Zudem kann es notwendig sein, um Schäden an der Biogasanlage zu vermeiden, das zunächst in unveränderter Menge beim Gärprozess entstehende und im Blockheizkraftwerk zum Antrieb verwendete Biogas, welches überschüssig ist, kontrolliert abzufackeln. Das derzeit umgesetzte Verfahren ist daher nur unzureichend geeignet, um in gleichem Maße den Anforderungen der Netzbetreiber und den Bedürfnissen der Anlagenbetreiber gerecht zu werden.

Der Erfindung liegt daher die Aufgabe zugrunde, ein Verfahren zur Anpassung der Einspeiseleistung und eine Vorrichtung zur Gewinnung von Energie aus Biomasse aufzuzeigen, mit Hilfe denen die vorbeschriebenen Nachteile vermieden werden.

Die Lösung der Aufgabe erfolgt erfindungsgemäß durch ein Verfahren mit den Merkmalen des Patentanspruches 1 und durch eine Vorrichtung mit den Merkmalen des Patentanspruches 7. Vorteilhafte Weiterbildungen und Ausgestaltungen der Erfindung sind in den Ansprüchen 2 bis 6 sowie den Ansprüchen 8 bis 11 angegeben.

Es ist ein Verfahren zur Anpassung der Einspeiseleistung von aus Biomasse, insbesondere aus Biogas, erzeugtem elektrischen Strom vorgesehen, bei dem die Höhe der Einspeiseleistung in Abhängigkeit von der im Stromnetz benötigten elektrischen Leistung anhand von eingehenden Impulsen verändert wird, bei dem nach der Erfindung der Prozess zur Stromerzeugung nach einem Impulseingang zur Reduzierung der Einspeiseleistung zumindest über eine bestimmte Zeitdauer unverändert weiter gefahren wird, wobei der nicht benötigte Teil des mindestens zeitweise in gleicher Höhe erzeugten Stromes abgezweigt und umgewandelt wird.

Mit einem derartig erfindungsgemäßen Verfahren zur Anpassung der Einspeiseleistung erfolgt nicht mehr die zwangsläufige Änderung auf der Erzeugerseite. Damit kann im Gegensatz zu den bekannten Verfahren der Erzeugerprozess auf vorteilhafte Weise ohne unnötige Regelmaßnahmen und ohne etwaige Schäden an der Anlage aufrechterhalten werden. Durch das Abzweigen eines vorbestimmten Stromanteils und das Umwandeln dieses Anteils in eine andere Energieform ist es mit Vorteil möglich, die Einspeiseleistung, trotz unveränderter Menge an erzeugtem Strom, relativ einfach auf die gewünschte Größe zu reduzieren. Anlagenbetreiber können somit sehr kurzfristig und ohne eine Beeinträchtigung der Stabilität des Erzeugerprozesses auf die durch die Netzbetreiber ausgegebenen Regelimpulse reagieren. Anstelle einer Umwandlung ist auch eine individuelle Nutzung durch den Anlagenbetreiber denkbar. Ebenso wie die Reduzierung der Einspeiseleistung kann über einen eingehenden Impuls durch einen Netzbetreiber auch wiederum die Erhöhung der Einspeiseleistung auf die normale Nennleistung durchgeführt werden. Dazu wird der Anteil des abgezweigten Stromes einfach wieder dem Einspeiseleiter zugeschaltet.

Nach einer Weiterbildung der Erfindung ist vorgesehen, dass der Prozess der Stromerzeugung dauerhaft auf unverändertem Niveau weitergefahren wird. Speziell bei Prozessen, wie z. B. der Erzeugung von Biogas, die relativ langsam auf sich ändernde Eingangsbedingungen reagieren, ist dadurch mit Vorteil eine optimale Stabilität des vorgeschalteten Gärprozesses gewährleistet. In der Vergangenheit hat oftmals das Wiederanfahren des Gärprozesses zu Schwierigkeiten bei der Wiederbereitstellung der Einspeiseleistung und dadurch zu weiteren Ertragsverlusten geführt. Solche Schwierigkeiten lassen sich mit dem erfindungsgemäßen Verfahren mit Vorteil nahezu ausschließen.

Bei Prozessen, die jedoch relativ schnell auf Änderungen der Eingangsbedingungen reagieren, kann alternativ vorgesehen sein, dass der Prozess der Stromerzeugung nach einer bestimmten Zeitdauer des Impulseinganges zur Reduzierung der Einspeiseleistung auf eine Größe heruntergefahren wird, bei dem noch stabile Prozessbedingungen vorherrschen. Eine derartige Regelung ist möglich, wo Prozesse zur Stromerzeugung Anwendung finden, die relativ gut regelbar sind. Das sind beispielsweise Prozesse, bei denen anfallende Biomasse, wie z. B. Holzreste, direkt verbrannt werden. Um den Verbrennungsprozess aufrecht zu erhalten, reicht es üblicherweise, die Zufuhr des Brennstoffes auf ein Minimum zu reduzieren. Die erfindungsgemäße Art der Anpassung der Einspeiseleistung auf der Stromseite hat des Weiteren den Vorteil, dass mögliche an die Energieerzeuger-Anlage angeschlossene Wärmeverbraucher weiterhin problemlos mit der bei der Stromerzeugung typischerweise anfallenden Abwärme versorgt werden können. Die Regelzeiten für das Herunter- oder Hochfahren des Prozesses nach einem durch den Netzbetreiber ausgegebenen Impulssignal können, in Abhängigkeit von der Regelbarkeit des Prozesses, wenige Minuten bis zu mehrere Stunden betragen. Es ist selbstverständlich möglich, nach dem Reduzieren der Einspeiseleistung auf der Stromseite allmählich den Erzeugerprozess herunterzufahren, um eine Verschwendung des Brennstoffes zu vermeiden.

Bevorzugt wird der nicht benötigte Teil des erzeugten Stromes auf eine Belastungseinrichtung geleitet und in Wärme umgewandelt. Das Umleiten und die Umwandlung des Stromes in Wärme stellt eine vorteilhaft einfache Möglichkeit der Vernichtung des nicht benötigten Anteiles des erzeugten Stromes dar. Bevorzugt lässt sich dabei der Anteil des aus dem Einspeiseleiter abgezweigten Stromes, der auf die Belastungseinrichtung umgeleitet wird, stufenlos einstellen. Damit ist neben einer vorteilhaft einfachen Regelung zudem ein modernes Lastmanagement umsetzbar. Neben den gesetzlichen Anforderungen durch das Erneuerbare-Energien-Gesetz zur Regulierung auf vorbestimmte Leistungsstufen von 100 %, 60 %, 30 % oder 0 %, kann im Bedarfsfall die Einspeiseleistung individuell angepasst werden. Damit ergibt sich neben einer eigenen, geforderten Leistungsverringerung zusätzlich die Möglichkeit, negative Regelenergie anzubieten. Mit der negativen Regelenergie lassen sich Überkapazitäten anderer Stromerzeuger abfangen, die ihre Einspeiseleistung, beispielsweise aufgrund technischer Probleme, nicht reduzieren können. Die Aufnahme solcher Überkapazitäten birgt den Vorteil einer entsprechenden Vergütung.

Bei einem Verfahren zum Betreiben von insbesondere einem Blockheizkraftwerk, bei dem zur Energieerzeugung direkt Biomasse oder ein aus Biomasse entstehendes Gärprodukt verwendet wird, und anschließend der erzeugte Strom über wenigstens einen Einspeiseleiter in das Stromnetz eingespeist wird, für das selbstständiger Schutz beantragt wird, ist nach der Erfindung vorgesehen, das ein Verfahren zur Anpassung der Einspeiseleistung nach einem der Ansprüche 1 bis 5 Anwendung findet. Mit einem solch erfindungsgemäßen Verfahren zum Betreiben von Blockheizkraftwerken, die insbesondere an Biomasse verwertenden Anlagen angeschlossen sind, lässt sich die Wirtschaftlichkeit einer solchen stromerzeugenden Vorrichtung vorteilhaft verbessern. Ausfälle, Schäden sowie aufwendige Wiederanfahrvorgänge lassen sich durch das erfindungsgemäße Verfahren auf ein Minimum reduzieren.

Bei einer Vorrichtung zur Erzeugung von zumindest elektrischer Energie aus Biomasse oder einem aus Biomasse entstehenden Gärprodukt, insbesondere einem Blockheizkraftwerk, mit zumindest einem Stromerzeuger und einem mit dem Stromerzeuger gekoppelten Einspeiseleiter, insbesondere zur Durchführung des Verfahrens zum Betreiben einer Vorrichtung zur Energieerzeugung, ist nach der Erfindung vorgesehen, dass an dem Einspeiseleiter eine Einrichtung zur Anpassung der Einspeiseleistung angeschlossen ist, mit der wenigstens ein Teil des erzeugten Stromes aus dem Einspeiseleiter abzweigbar und umwandelbar ist.

Mit Hilfe einer derartig erfindungsgemäß ausgebildeten Vorrichtung zur Erzeugung elektrischer Energie, wie z. B. einem Blockheizkraftwerk oder dergleichen, können die von den Netzbetreibern an die Stromerzeuger gestellten Anforderungen stets auf vorteilhafte Weise erfüllt werden. Für die Betreiber einer solchen erfindungsgemäßen Vorrichtung ergibt sich zudem ein vorteilhaft verringerter Regelaufwand der Anlage, wodurch möglicherweise dadurch entstehende instabile Prozesse oder gar Schäden an der Vorrichtung selbst vermieden sind. Die erfindungsgemäßen Vorrichtungen sind dabei insbesondere an eine die Biomasse direkt verwertende oder ein aus Biomasse entstehendes Gärprodukt, wie Biogas, erzeugende Anlage angeschlossen. In Abhängigkeit von den insbesondere aus dem Stromnetz eingehenden Impulsen wird nunmehr mit der erfindungsgemäßen Einrichtung zur Anpassung der Einspeiseleistung die in das Versorgernetz einzuspeisende Strommenge pro Zeiteinheit begrenzt. Die Begrenzung kann stets unabhängig von der Gesamtleistung des erzeugten Stromes erfolgen. Der nicht zur Einspeisung vorgesehene Anteil des erzeugten Stromes wird mittels der Einrichtung zur Anpassung bevorzugt direkt nach der Stromerzeugung, was beispielsweise durch einen Generator erfolgt, am Einspeiseleiter abgezweigt und in eine andere Energieform umgewandelt.

Nach einer vorteilhaften Weiterbildung der Erfindung ist vorgesehen, dass die Einrichtung zur Anpassung der Einspeiseleistung mindestens eine Belastungseinrichtung zur Umwandlung des abgezweigten Stromes in Wärme aufweist. Die Verwendung einer Belastungseinrichtung mit der der überflüssige Strom in Wärme umgewandelt werden kann, stellt eine vorteilhaft einfache Möglichkeit der Umwandlung des nicht verwertbaren Stromes dar. Die Umwandlung des Stromes kommt einer "Vernichtung" gleich, falls die aus dem Strom umgewandelte Energie nicht weiter genutzt wird. Darüberhinaus ist der Einsatz einer Belastungseinrichtung mit Vorteil wartungsarm. Die Belastungseinrichtung ist vorzugsweise als Lastbank ausgebildet, welche insbesondere mehrere Heizwiderstände und Spulen aufweisen kann. Mit Hilfe der Heizwiderstände und der Spulen wird der Anteil des Stromes abgebaut bzw. umgewandelt, der nicht über den Einspeiseleiter in das Stromnetz eingespeist werden kann. Die Größe der Lastbänke richtet sich grundlegend nach der Erzeugerleistung der eingesetzten Vorrichtungen zur Stromerzeugung. Über die Belastungseinrichtungen können Belastungen in der Größenordnung zwischen etwa 10 kW bis zu mehreren Megawatt umgewandelt werden. Es ist ebenso denkbar, mehrere Belastungseinrichtungen steuerungstechnisch miteinander zu verknüpfen.

Bevorzugt weist die Einrichtung zur Anpassung der Einspeiseleistung eine den Anteil des abgezweigten Stromes stufenlos steuerbare Steuereinheit auf. Dadurch kann auf vorteilhafte Weise die in das Stromnetz eingespeiste Einspeiseleistung individuell in Abhängigkeit von einer im Stromnetz vorhandenen Überlast angepasst werden. Mit der an der Einrichtung stufenlos einstellbaren Einspeiseleistung lässt sich zudem ein modernes Lastmanagement umsetzen. Somit kann unabhängig von möglichen Impulsen, die von den Netzbetreibern eingehen, zusätzlich negative Regelenergie angeboten werden. Mit der erfindungsgemäßen Belastungseinrichtung besteht eine ergänzende Regelungsmöglichkeit der tatsächlichen Einspeiseleistung über den Strommarkt. Vorhandene Überkapazitäten von anderen Stromerzeugern können vorteilhaft sicher und schnell aufgefangen werden, die zudem in entsprechender Höhe vergütet werden. Dadurch ist die Wirtschaftlichkeit der regenerativen Stromerzeugersysteme zusätzlich verbessert.

Die Steuereinheit der Einrichtung ist insbesondere mit einem Empfänger für aus dem Stromnetz eingehende Impulse verknüpft, mit dem die Regelsignale stets direkt an die Einrichtung zur Anpassung der Einspeiseleistung übermittelt werden. Die Datenübermittlung über das Stromnetz stellt eine vorteilhaft einfache Möglichkeit zur Ansteuerung der stets direkt mit dem Stromnetz verbundenen Einrichtung dar. Als Empfänger wird insbesondere ein Rundsteuerempfänger eingesetzt, dessen Einsatz sich in diesem Zusammenhang bewährt hat.

Bei einer Einrichtung zur Anpassung der Einspeiseleistung von aus Biomasse, insbesondere aus Biogas, erzeugtem elektrischen Strom zur Verwendung an insbesondere einem Blockheizkraftwerk, für die ebenfalls selbständiger Schutz beantragt wird, ist erfindungsgemäß eine Belastungseinrichtung vorgesehen, welche strom leitend mit einem Einspeiseleiter koppelbar ist, wobei die Belastungseinrichtung Mittel zum Umwandeln von zumindest eines Anteiles des erzeugten elektrischen Stromes aufweist. Eine derartig erfindungsgemäß ausgebildete Einrichtung zur Anpassung der Einspeiseleistung weist elektrische Bauteile wie z. B. Heizwiderstände oder Spulen auf, mit Hilfe denen der überflüssige von der Einrichtung abgezweigte Strom vorteilhaft einfach vernichtet, vorzugsweise in Wärme umgewandelt werden kann. Vorteilhafte Weiterbildungen und Ausgestaltungen der erfindungsgemäßen Einrichtung zur Anpassung der Einspeiseleistung sind in den oben genannten Abschnitten beschrieben.

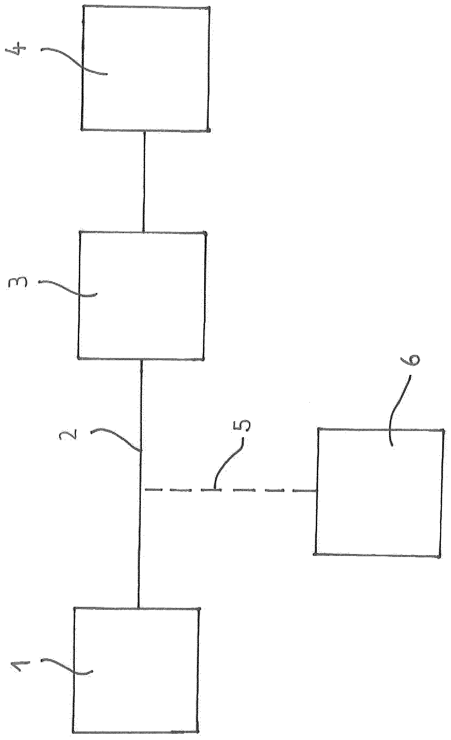

Ein mögliches Ausführungsbeispiel der Erfindung, aus dem sich weitere erfinderische Merkmale ergeben, ist in der Zeichnung dargestellt.

Die einzige Figur zeigt eine schematische Blockschaltbilddarstellung der erfindungsgemäßen Vorrichtung und der daran eingesetzten Einrichtung zur Anpassung der Einspeiseleistung.

Mit 1 ist insbesondere ein Blockheizkraftwerk bezeichnet, das über einen Einspeiseleiter 2 mit einer Trafostation 3 und dem daran angeschlossenen Stromnetz 4 verbunden ist. Mit dem Einspeiseleiter 2 ist über einen Abzweig 5 eine Einrichtung 6 zur Anpassung der Einspeiseleistung verbunden, mit Hilfe der die über den Einspeiseleiter 2 üblicherweise in das Stromnetz abgegebene Einspeiseleistung nunmehr in Abhängigkeit der vorliegenden Anforderung optimal angepasst werden kann. Die in Form von Impulsen aus dem Stromnetz kommenden Steuersignale gehen dabei stets direkt auf die Einrichtung 6 zur Anpassung der Einspeiseleistung, wodurch nicht mehr eine Veränderung des eigentlichen Stromerzeugerprozesses notwendig ist. In der Einrichtung 6 wird der aus dem Einspeiseleiter 2 abgezweigte Stromanteil dann vernichtet.

## Patentansprüche

1. Verfahren zur Anpassung der Einspeiseleistung von aus Biomasse, insbesondere aus Biogas, erzeugtem elektrischen Strom, bei dem die Höhe der Einspeiseleistung in Abhängigkeit von der im Stromnetz benötigten elektrischen Energie anhand von eingehenden Impulsen verändert wird,
**dadurch gekennzeichnet,**
**dass** der Prozess zur Stromerzeugung nach einem Impulseingang zur Reduzierung der Einspeiseleistung zumindest über eine bestimmte Zeitdauer unverändert weitergefahren wird, wobei der nicht benötigte Teil des zumindest zeitweise in gleicher Höhe erzeugten Stromes abgezweigt und umgewandelt wird.

2. Verfahren nach Anspruch 1, **dadurch gekennzeichnet, dass** der Prozess der Stromerzeugung dauerhaft auf unverändertem Niveau weitergefahren wird.

3. Verfahren nach Anspruch 1, **dadurch gekennzeichnet, dass** der Prozess der Stromerzeugung nach einer bestimmten Zeitdauer des Impulseinganges zur Reduzierung der Einspeiseleistung auf eine Größe heruntergefahren wird, bei dem mindestens stabile Prozessbedingungen vorherrschen.

4. Verfahren nach einem der Ansprüche 1 bis 3, **dadurch gekennzeichnet, dass** der nicht benötigte Anteil des erzeugten Stromes auf eine Belastungseinrichtung geleitet und in Wärme umgewandelt wird.

5. Verfahren nach einem der Ansprüche 1 bis 4, **dadurch gekennzeichnet, dass** der Anteil des von der Einspeiseleistung abgezweigten Stromes stufenlos eingestellt wird.

6. Verfahren zum Betreiben von insbesondere einem Blockheizkraftwerk, bei dem zur Energieerzeugung direkt Biomasse oder ein aus Biomasse entstehendes Gärprodukt verwendet wird, und anschließend der erzeugte Strom über wenigstens einen Einspeiseleiter in das Stromnetz eingespeist wird,
**dadurch gekennzeichnet,**
**dass** ein Verfahren zur Anpassung der Einspeiseleistung nach einem der Ansprüche 1 bis 5 verwendet wird.

7. Vorrichtung zur Erzeugung von zumindest elektrischer Energie aus Biomasse oder einem aus Biomasse entstehenden Gärprodukt, insbesondere Blockheizkraftwerk, mit zumindest einem Stromerzeuger und einem mit dem Stromerzeuger gekoppelten Einspeiseleiter, insbesondere zur Durchführung des Verfahrens nach Anspruch 6,
**dadurch gekennzeichnet,**
**dass** an dem Einspeiseleiter (2) eine Einrichtung (6) zur Anpassung der Einspeiseleistung angeschlossen ist, mit der wenigstens ein Teil des erzeugten Stromes aus dem Einspeiseleiter (2) abzweigbar und umwandelbar ist.

8. Vorrichtung nach Anspruch 7, **dadurch gekennzeichnet, dass** die Einrichtung (6) zur Anpassung der Einspeiseleistung mindestens eine Belastungseinrichtung zur Umwandlung des abgezweigten Stromes in Wärme aufweist.

9. Vorrichtung nach einem der Ansprüche 7 und 8, **dadurch gekennzeichnet, dass** die Einrichtung (6) eine den Anteil des abgezweigten Stromes stufenlos steuerbare Steuereinheit aufweist.

10. Vorrichtung nach Anspruch 9, **dadurch gekennzeichnet, dass** die Steuereinheit der Einrichtung (6) mit einem Empfänger für aus dem Stromnetz eingehende Impulse verknüpft ist.

11. Einrichtung zur Anpassung der Einspeiseleistung von aus Biomasse, insbesondere aus Biogas, erzeugtem elektrischen Strom zur Verwendung an einem Blockheizkraftwerk oder dergleichen,
**gekennzeichnet durch**
eine Belastungseinrichtung, welche stromleitend mit einem Einspeiseleiter (2) koppelbar ist, wobei die Belastungseinrichtung Mittel zum Umwandeln von zumindest eines Anteils des erzeugten elektrischen Stromes aufweist.
